# EUROPEAN PATENT SPECIFICATION

(11) **EP 0 608 788 B1**
(45) Date of publication and mention of the grant of the patent: **29.05.1996**
(21) Application number: 94100900.3
(22) Date of filing: 22.01.1994
(51) Int. Cl.: H02M 3/28, H02M 7/48

(54) **Power conversion system**
Leistungswandlungseinrichtung
Dispositif de conversion de puissance

(30) Priority: 29.01.1993 ES 9300174
(43) Date of publication of application: 03.08.1994
(73) Proprietor: ALCATEL STANDARD ELECTRICA, S.A., E-28045 Madrid (ES)
(72) Inventor: Sancho Rotger, José Félix, E-28029 Madrid (ES)
(74) Representative: Pohl, Herbert, Dipl.-Ing

(56) References cited:
- PROCEEDING OF THE XIII INTERNATIONAL TELECOMMUNICATION ENERGY CONFERENCE (INTELEC), November 1991, KYOTO, JAPAN pages 544 - 551 L. RUIZ 'Intelligent Power System for Telecommunications Applications'

## Description

### OBJECT OF THE INVENTION

This invention, as stated in the title of this document, refers to a power supply system with a modular configuration, comprising a set of converters with their outputs connected in parallel, with a current-mode control being applied, in order to feed a set of loads and/or batteries and in which use is made of a single error amplifier common to all the converters, the reference voltage being obtained by a control circuit from the result of a set of tables applied to state variables.

The power conversion system of the invention is particularly applicable to the feeding of equipments where the scale required has to be in line with the load and/or batteries being fed.

### BACKGROUND TO THE INVENTION

In recent years significant effort has been made in developing modular power supply systems whereby it is possible to configure a modular system perfectly scaled to the requirements of the load, which results in a major cost reduction in many aspects: manufacturing, reparation, maintenance, etc.

To achieve the foregoing, use is made of converters that turn the alternating current obtained from the mains or from any other source into direct current by means of a current-mode control configuration, such that they can be paralleled with other similar converters and the current supplied by the set is the sum of the currents individually supplied by each of these modules.

All the foregoing can be read in the article "Intelligent Power Systems for Telecommunications Applications" by L. Ruiz and J. Sancho, published in the Proceedings of the XIII International Telecommunications Energy Conference (INTELEC), 1991 Kyoto, Japan, pages 544-551.

In this article a block diagram of a modular power supply system comprising a set of converters is shown, whose output currents I_{d} are added to feed a battery with a current I_{b} and a load with a current Iₗ, the output voltage being V_{b}. Through the use of an error amplifier common to all the converters in the output voltage regulating loop it is achieved that these converters work in parallel without problems of incompatibility in load sharing.

One of the inputs to the error amplifier is the output voltage of the converters, while the other is a reference voltage that is initially fixed and which in the document previously mentioned is a reference voltage obtained by a control circuit as a result of applying a set of battery loading tables to the system state variables in accordance with a number of operating strategies.

Nevertheless, although this system adjusts the reference voltage V_{ref} to an optimum value to perform the output voltage regulation of the converters, the variations of some variables are not regulated by the system, in such a way that, for example, nothing is done to determine the optimum loading conditions of the batteries and so prolong their useful life, or the hookup speed of the control loop takes too long whereby rapid changes in the loading take a certain time to be compensated and the consequences have to be absorbed by other elements, such as the battery, converters, etc.

### TECHNICAL PROBLEM TO BE OVERCAME

The technical problem to be overcame is to achieve a fast and accurate regulation of any state variable or combination of state variables of the system in such a way that the operating conditions do not result harmful for any element in the system, extending thereby its useful life, and, simultaneously, performing protective functions on it.

### CHARACTERISATION OF THE INVENTION

This invention is characterised in that it has a series of converters with their outputs connected in parallel and that feed a set of batteries and/or loads, employing for this a current-mode control that makes use of a first error amplifier common to all the converters. This first error amplifier amplifies the difference between the output voltage of the converters and a first reference voltage obtained as a result of amplifying, in a second error amplifier, a second updated reference signal coming from a set of tables established from the system state variables and from one of the system state variables previously selected and filtered, to create in this way a second feedback loop nesting in the one already existing, such that, due to this new feedback, control is obtained of the state variable that is applied to the filter.

In the same way, the preceding process can be done for a combination of state variables that are each applied, respectively, to a filter that can be configured according to different needs and to which is assigned a given weighting that depends on the strategy it is wished to pursue.

All this process is made possible by means of digital circuits whereby the storage and selection of the tables is immediate and the modification of filtering of the state variables is also much more simple and flexible when use is made of digitised versions of these state variables done by analogue to digital converters and, subsequent digital to analogue conversion at the output of the process described above and carried out by digital circuits.

In addition, this digital circuit permits control of the battery loading situation since it keeps a historical record of the current entering and leaving these batteries, as well as the data provided by the manufacturer: temperature, etc.

Finally, thanks to this second feedback loop and taking into account the battery charge state, it is possible to perform the charging and maintenance of the batteries in accordance with optimum cirteria provided by the manufacturers ante their evolution with time through the incorporation of data obtained from real measurements, such that, in the charging state, the state variable that controls this loop is the battery charge current, holding it accurately at its nominal value, according to the type of cell and its capacity. In the case when the battery is floating or in a floating-charge condition, i e., the charge process of the battery has been completed and it has reached its condition of maximum charge (in this condition, the charge current must be kept to a very low level, termed floating current, to restore the charge loses and leaks of the battery, otherwise, the battery will be damaged), the variables that are controlled are the output voltage and current, keeping these at battery floating voltage and current, respectively.

The system of the invention, thanks to the exhaustive control it performs on any parameter or combination of parameters (state variable), offers great reliability, prolongation of the useful life of any of the component parts and, consequently, a significant reduction in costs.

### BRIEF FOOTNOTES TO THE FIGURES

A more detailed explanation of the invention is to be found in the description below, based on the accompanying figures in which:
- figure 1 shows a block diagram of a power supply system that makes use of a common error amplifier, the reference voltage of which depends on a set of system state variables,
- figure 2 shows the procedure for obtaining the reference voltage that is applied to the error amplifier of figure 1 in accordance with the state of the art,
- figure 3 shows a block diagram of the part in which the reference voltage is obtained for the power conversion system in accordance with the invention, and
- figure 4 shows a more detailed block diagram of a possible implementation of the diagram in figure 3 in accordance with the invention.

### DESCRIPTION OF THE INVENTION

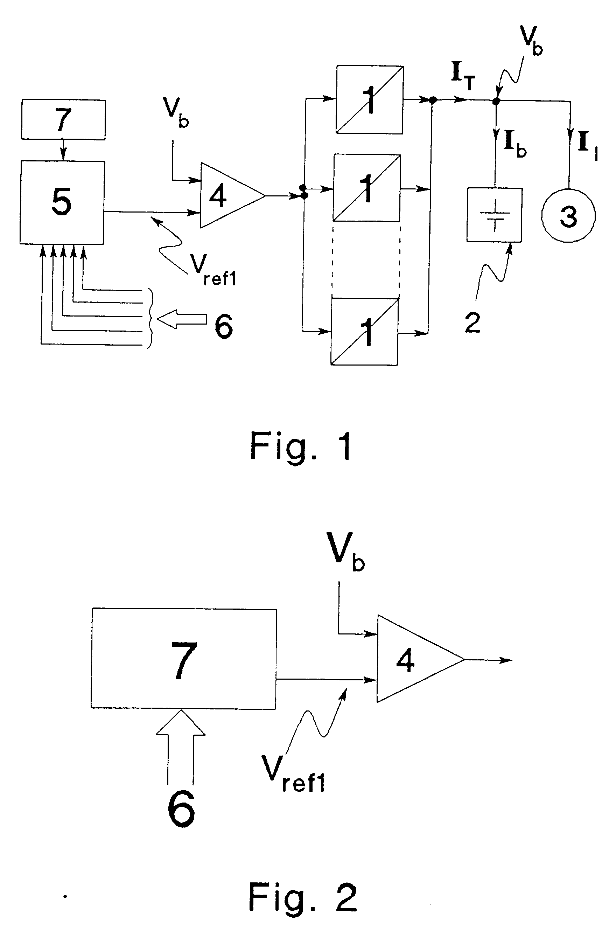

The block diagram of figure 1 shows a power conversion system according to current state of the art. In it, there is a series of converters 1 which are controlled in current mode, such that it is possible to connect their outputs in parallel directly. In order to perform a control process that makes it compatible for all the converters 1 to work correctly, it is necessary to make use of a first error amplifier 4 common to all the aforementioned converters 1 and which provides the same error signal for all the comparators contained in the current-mode analogue control loop of the converters 1.

If the gain of the first error amplifier 4 is large, the feedback loop tends to fix an output voltage V_{b} equal to the first reference voltage V_{ref1} used in the other input of this first error amplifier 4.

As the working conditions of the batteries, such as temperature, charging or discharging current, state of load, etc., affect their working life, it is necessary to take these parameters into account in defining the first reference voltage V_{ref1} and consequently the output voltage that should appear. This is done by applying different tables 7 in accordance with defined strategies to a control circuit 5, that produce the optimum value of this first reference voltage V_{ref1} according to the manufacturer's informations. This process can be performed by means of the block diagram of figure 2.

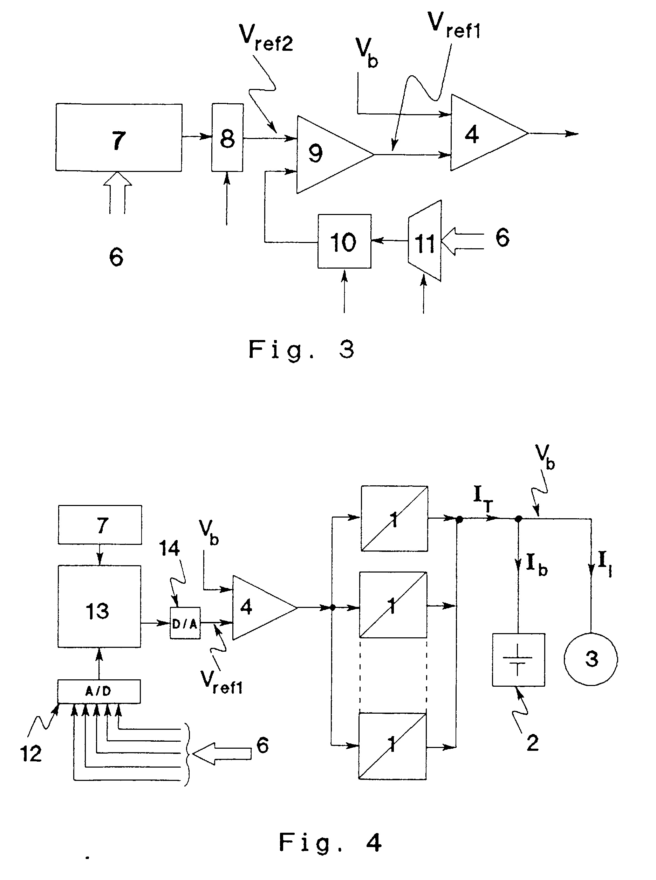

By use of a second digital feedback loop, as is partially shown in figure 3, it is possible to control the desired state variable accurately and in the desired form, in order to achieve the optimum operating conditions of the system.

To this end, the control or state variable is selected by means of a selector 11 in accordance with a determined strategy that also depends on the state variables 6.

The selected state variable is filterd in a feedback filter 10 whose transfer function can also be modified referred to the selected state variable. Its output is applied to a second error amplifier 9 that amplifies the difference between the output of the feedback filter 10 and the reference voltage obtained from the tables 7 provided by the manufacturers of the batteries that contain the nominal values, and corrected in a corrector circuit 8 that takes into account the real measurements, or developed from earlier states.

The amplified error signal coming from this second amplifier 9 is what is actually applied to the first error amplifier 4 that is already known to form part of existing systems in accordance with the state of the art.

Finally figure 4 shows how the selector is implemented as an analogue to digital converter 12 with selectable input such that all the following components like the feedback filter (that is also selectable), the tables 7 of curves and strategies supplied by the battery manufacturer, and the second error amplifier 9 shown in figure 3, are implemented in a digital form through the use of a microcontroller 13 and the subsequent use of a digital to analogue converter 14 in order to obtain the first reference voltage V_{ref1} that feeds the first error amplifier 4 common to the converters 1 in order then to carry out the control process in accordance with the state of the art.

Due to the great precision required in the analogue to digital conversion to perform precise control, and the fact that the mains is a major source of noise, use is made of a double ramp analogue to digital converter with an integrating period equal to the mains period in a recommended implementation.

In accordance with the configuration of the system described above, it is possible to control in precise fashion the battery charging process when the state variable selected is the battery charging current I_{b} when the battery 2 is in the charging state, such that this battery charging current I_{b} adjusts to the value provided by the manufacturer for the cell type and capacity. When the battery is already charged or in floating-charge, the new state variables will be the output voltage that should adapt to the value of the battery floating voltage and the charging current in the floating state. Nevertheless, if the power delivered to the set of batteries 2 and load 3 increases the temperature of the converters 1 dangerously, it is then possible to control the total current I_{T} supplied by these converters 1 such that the delivered power is controlled, and therefore the temperature they reach.

Independently, the microcontroller would activate the necessary alarms and take the consequent preprogrammed actions in the event of operational anomalies.

## Claims

1. Power conversion system formed by a set of converters (1) whose output are connected in parallel to provide a total output current (IT) that feeds a set of batteries (2) and load (3), on which a current mode control is performed making use of a first error amplifier (4) common to all the converters (1) that amplifies the difference between the voltage (Vb) at the output of the converters (1) and a first reference voltage (Vrefl) that is obtained from a control circuit (5) from a set of state variables (6) making use of previously stored tables (7) and strategies,
**characterized in that** the signal obtained from these tables (7) is applied to a corrector circuit (8), that modifies the value of said signal taking into account real measurements or developed from early states, the output signal of which being sent to one of the inputs of a second error amplifier (9), its other input being fed by the signal coming from a filter (10) that filters a state variable or combination of these, the transfer function of which can be modified according to operating strategies and forming, in this way, a second feedback loop that produces the regulation of any state variable or combination of state variables (6).

2. System according to claim 1
characterized in that the state variables (6) of analogue nature are converted to digital in a block of analogue to digital converters (12), in this way being the transfer function of the filter (10) for the state variables (6) implemented in digital form in the actual control circuit, and being also possible to modify this transfer function.

3. System according to claim 2
characterized in that use is made of a single analogue to digital converter (12) in order to carry out the analogue to digital conversion of the state variables (6) by selecting one of them at a given moment at the input to this analogue to digital converter.

4. System according to claim 3
characterized in that the analogue to digital converter (12) is of the double slope type with a constant of integration that is equal to the mains period.

5. System according to claim 1
characterized in that, depending on the charging state of the batteries (2) and the state variables (6), the operating strategy of the digital loop varies in accordance with the following criteria:
- When the battery is in charging state, the battery charging current (Ib) is kept constant in accordance with the cell type and capactiy,
- When the battery is in floating or in floating-charge, the output voltage (Vb) and the charging current (Ib) of the battery (2) are adapted to the battery floating voltage and floating current respectively.

6. System according to claim 1
characterized in that it controls the total current (It) supplied by the converters (1) when the temperature of these reaches a determined value.

## Patentansprüche

1. Leistungsumwandlungssystem, das aus einer Gruppe von Umsetzern (1) gebildet wird, deren Ausgänge parallelgeschaltet sind, um einen Gesamtausgangsstrom (I_{T}) bereitzustellen, der eine Gruppe von Batterien (2) und eine Last (3) speist, auf der eine Stromsteuerung durchgeführt wird, wobei ein erster Fehlerverstärker (4), der allen Umsetzern (1) gemein ist, verwendet wird, der die Differenz zwischen der Spannung (V_{b}) am Ausgang der Umsetzer (1) und einer ersten Referenzspannung (v_{ref1}) verstärkt, die man von einer Steuerschaltung (5) von einer Gruppe von Zustandsvariablen (6) unter Verwendung von zuvor gespeicherten Tabellen (7) und Strategien erhält,
dadurch gekennzeichnet, daß das von diesen Tabellen (7) erhaltene Signal an eine Korrekturschaltung (8) angelegt wird, die den Wert des Signals unter Berücksichtigung tatsächlicher oder aus früheren Zuständen ermittelter Meßwerte ändert, deren Ausgangssignal an einen der Eingänge eines zweiten Fehlerverstärkers (9) angelegt wird, dessen anderem Eingang das von einem Filter (10) kommende Signal zugeführt wird, das eine Zustandsvariable oder eine Kombination von Zustandsvariablen filtert und dessen Übertragungsfunktion entsprechend Funktionsstrategien geändert werden kann und wobei auf diese Weise eine zweite Rückkopplungsschleife gebildet wird, die zur Regelung einer beliebigen Zustandsvariablen oder einer Kombination von Zustandsvariablen (6) führt.

2. System nach Anspruch 1, dadurch gekennzeichnet, daß die analogen Zustandsvariablen (6) in einem Block von AnalogDigital-Umsetzern (12) in digitale Zustandsvariable umgesetzt werden, die auf diese Weise die Übertragungsfunktion des Filters (10) für die Zustandsvariablen (6) sind, das in der eigentlichen Steuerschaltung digital realisiert ist, wobei es auch möglich ist, diese Übertragungsfunktion zu ändern.

3. System nach Anspruch 2, dadurch gekennzeichnet, daß ein einzelner Analog-Digital-Umsetzer (12) verwendet wird, um die Analog-Digital-Umsetzung der Zustandsvariablen (6) durchzuführen, indem eine von ihnen in einem bestimmten Moment am Eingang dieses Analog-Digital-Umsetzers ausgewählt wird.

4. System nach Anspruch 3, dadurch gekennzeichnet, daß der Analog-Digital-Umsetzer (12) ein Doppelrampenumsetzer mit einer Integrationskonstanten ist, die gleich der Netzperiode ist.

5. System nach Anspruch 1, dadurch gekennzeichnet, daß sich die Funktionsstrategie der digitalen Schleife in Abhängigkeit des Ladezustands der Batterien (2) und der Zustandsvariablen (6) gemäß den folgenden Kriterien ändert:
- Wenn sich die Batterie im Ladezustand befindet, wird der Batterieladestrom (I_{b}) entsprechend der Zellenart und der Zellenkapazität konstant gehalten,
- wenn sich die Batterie im Leerlauf oder im Ladeerhaltungszustand befindet, werden die Ausgangsspannung (V_{b}) und der Ladestrom (I_{b}) der Batterie (2) an die Leerlaufgleichspannung beziehungsweise den Leerlaufgleichstrom der Batterie angepaßt.

6. System nach Anspruch 1, dadurch gekennzeichnet, daß es den von den Umsetzern (1) gelieferten Gesamtstrom (Iₜ) steuert, wenn die Temperatur der Umsetzer einen festgelegten Wert erreicht.

## Revendications

1. Système de conversion de puissance formé par un ensemble de convertisseurs (1) dont les sorties sont connectées en parallèle pour fournir un courant de sortie total (IT) qui alimente un ensemble de batteries (2) et une charge (3), sur lequel une commande en mode courant est effectué, à l'aide d'un premier amplificateur d'erreur (4) commun à tous les convertisseurs (1) et qui amplifie la différence entre la tension (Vb) à la sortie des convertisseurs (1) et une première tension de référence (Vrefl) obtenue d'une circuit de commande (5) à partir d'un ensemble de variables (6) par l'emploi de tables (7) et de stratégies préalablement enregistrées
**caractérisé** en ce que le signal obtenu de ces tables (7) est appliqué à un circuit correcteur (8) modifiant la valeur dudit signal en fonction de mesures réelles ou effectuées antérieurement et dont le signal de sortie est fourni à l'une des entrées d'un deuxième amplificateur d'erreur (9) dont l'autre entrée reçoit un signal venant d'un filtre (10) qui filtre une variable d'état ou une combinaison de telles variables et dont la fonction de transfert peut être modifiée en raison de stratégies de fonctionnement et qui forme, de cette façon, une deuxième boucle de régulation permettant la régulation de toute variable d'état ou combinaison de variables d'état (6).

2. Système conforme à la revendication 1, caractérisé en ce que les variables d'état (6), de nature analogique, sont converties en la forme numérique dans un bloc de convertisseurs analogique-numérique (12), la fonction de transfert du filtre (10) des variables d'état (6) étant ainsi implémentée sous forme numérique dans le circuit de commande présent, tandis qu'il est également possible de modifier cette fonction de transfert.

3. Système conforme à la revendication 2, caractérisé en ce que l'on utilise un seul convertisseur analogique-numérique (12) pour effectuer la conversion d'analogique en numérique des variables d'état (6), en sélectionnant l'une d'entre elles à un moment donné à l'entrée de ce convertisseur analogique-numérique.

4. Système conforme à la revendication 4, caractérisé en ce que le convertisseur analogique-numérique (12) est du type à double pente avec une contante d'intégration égale à la période du secteur d'alimentation.

5. Système conforme à la revendication 1, caractérisé en ce que, selon l'état de charge des batteries (2) et les variables d'état (6), la statégie de fonctionnement de la boucle numérique varie en fonction des critères suivant :
- lorsque la batterie est en cours de charge, le courant de charge de batterie (Ib) est maintenu constant, en accord avec le type et la capacité de la batterie,
- lorsque la batterie est flottante ou en charge flottante, la tension de sortie (Vb) et le courant de charge (Ib) de la batterie (2) sont respectivement adaptés à la tension et au courant de batterie flottante.

6. Système conforme à la revendication 1, caractérisé en ce qu'il commande le courant total (It) fourni par les convertisseurs (1), lorsque la température de ces derniers atteint une valeur déterminée.
